# EUROPEAN PATENT SPECIFICATION

(11) **EP 3 649 658 B1**
(45) Date of publication and mention of the grant of the patent: **14.04.2021**
(21) Application number: 18759863.6
(22) Date of filing: 09.08.2018
(51) Int. Cl.: H01F 27/00

(54) **METHOD FOR SERVICING A TRANSFORMER AND TRANSFORMER ARRANGEMENT**
VERFAHREN ZUR WARTUNG EINES TRANSFORMATORS UND TRANSFORMATORANORDNUNG
PROCÉDÉ D'ENTRETIEN DE TRANSFORMATEUR ET AGENCEMENT DE TRANSFORMATEUR

(30) Priority: 17.08.2017 DE 102017214345
(43) Date of publication of application: 13.05.2020
(73) Proprietor: Siemens Gamesa Renewable Energy A/S, 7330 Brande (DK)
(72) Inventor: JENSEN, Lasse, 6800 Varde (DK)
(74) Representative: Aspacher, Karl-Georg
(86) International application number: PCT/EP2018/071595
(87) International publication number: WO 2019/034513

(56) References cited:
- WO-A1-2011/120543
- DE-A1-102013 212 475
- GB-A- 312 417
- US-A- 3 259 808

## Description

The invention concerns a method for servicing a transformer, especially a transformer of a wind turbine. The invention also concerns a transformer arrangement.

Wind turbines, e.g. offshore wind turbines, use high performance transformers for power conditioning. These high performance transformers are typically placed within a case that can e.g. be used for oil cooling the transformer. The windings of the transformer are connected to the outside of the case by so-called bushing rods. These are rods that are made from metal, e.g. copper, and that are connected to a respective winding on the inner side of the rod and that pass through the case. If a conductive case is used a bushing or isolation can be used that is arranged between the bushing rod and the case.

The bushing rods on the high- and/or low-voltage side of the transformer can be damaged, e.g. when the wind turbine is hit by lightning. This is especially problematic, when the transformers used in an offshore wind turbine, since typically the whole transformer or container that houses the transformer needs to be shipped to the shore to be repaired. On-site repairs are typically not possible, since it would be necessary to disassemble the case of the transformer to reach the bushing rods

Examples of servicing a transformer are described in US 3 259 088 A, WO 2011/120543 A1, GB 321 417 A and DE 10 2013 212475.

The object of the present invention is to provide an improved method for servicing a transformer, that preferably allows to exchange or service at least some parts of the transformer on-site without dismounting the transformer.

This problem is solved by a method for servicing a transformer, especially a transformer of a wind turbine, wherein a lifting devices is used to lift a lid that closes a case of a transformer from the case to expose at least one electrical component of the transformer that is connected to the lid for exchanging or servicing the electrical component, wherein the lifting device comprises at least one fixed component that is fixed with respect to the case and at least one movable component that is coupled to the lid, wherein the movable component is movable with respect to the fixed component by at least one actuator to lift the lid.

The proposed method allows for access to the components of the transformer without dismounting the case. Direct access to the relevant component can be achieved on-site, and changing or servicing the electrical component can therefore be achieved without dismounting the transformer from its normal usage position. Therefore, the downtime of the transformer and therefore of the wind turbine as well as the workload created for exchanging or servicing the component can be reduced.

The lid can preferably be moved linearly with respect to the case when the movable component is moved. In this case components attached to the lid keep their distance to the side walls of the case. The movable component is preferably moved linearly with respect to the fixed component. This can be achieved directly by using a linear actuator or by using a transmission to convert, e.g. a circular motion of an actuator to a linear movement. The actuator can be an electrical actuator that converts electrical control signals into movement. Alternatively or additionally hydraulical or mechanical actuators can be used to cause the movement of the movable component with respect to the fixed component.

Additionally to the electrical component to be serviced or exchanged, e.g. the bushing rod, additional components, e.g. the transformer core or at least one of the windings can be attached to the lid to ensure mechanical stability when the lid is lifted from the case. This is especially advantageous when a bushing rod that should be exchanged is weakened by damage caused to the bushing rod, e.g. by lightning.

A conductive connecting element, e.g. a bushing rod, that is electrically connected to a respective winding of the transformer and passes through the lid can be replaced as the electrical component. The connecting element can especially be coupled to the lid via an isolation element, e.g. a bushing.

The lifting device can comprise at least one telescopic bar, wherein the lid is lifted by extending the telescopic bar via the actuator. Preferably multiple, e.g. four, telescopic bars and respective actuators are arranged around the case to lift the lid from several sides of the case. The telescopic bars preferably comprises a fixed bar that is fixed with respect to the case and the movable bar that is directly or indirectly connected to the lid. When the movable bar is moved with respect to the fixed bar the lid is pushed up.

The at least one moveable component can be, comprise or form a lift frame that is coupled to the lid at at least two separate positions. Such a lift frame can also be called lifting yoke. The lift frame can have a rectangular shape and be e.g. formed by four orthogonal bars.

The lifting device can comprise at least two or three of the telescopic bars, wherein the lift frame is connected to all the telescopic bars, especially to the movable bars of the telescopic bars. The connection to the telescopic bars can especially be at the corners or close to the corners of the lifting frame. The fixed bars can be arranged around the case and attached to the case or to a common carrying structure. The telescopic bars can be arranged such that they extend in the direction that the lid is lifted off the case. Using a lid that is placed on top of a case that is lifted upward is advantageous when the case is used to house coolant, e.g. oil. The coolant does not need to be removed from the case in this case to service or exchange the electrical component.

The lid can be lifted until the distance between the lid and the case is at least 200 mm, preferably at least 300 mm. In this case the height is typically sufficient to reach the relevant electrical components and to be able to service and/or exchange them.

The lid can be locked into position after lifting the lid by a locking means. Additionally or alternatively at least one blocking element, preferably two or three blocking elements, can be placed between the lid and the case before the electrical component is exchanged or serviced. Both approaches allow to secure the lid in a raised position, even when a relatively simple lifting mechanism is used. An unintentionally dropping of the lid needs to be avoided, since service personal might be working under the lid. At the same time the discussed approaches for securing the lid can be implemented very simply and cost effective and avoid needing, e.g. a redundancy layer within the lifting device to secure the lid. The gap between the lid and the case can be at least partially covered by a cover or a tarpaulin before the electrical component is exchanged or serviced. This cover or tarpaulin can be mounted between the lid and the case which can, e.g. be an oil-tub. This can help to avoid a dropping of dirt or objects inside the transformer. This allows to safely work around and underneath the lid without risking a contamination of the coolant, e.g. of the transformer oil.

The invention also concerns a transformer arrangement, especially a transformer arrangement for a wind turbine, comprising a transformer that comprises a case, a lid that closes the case and at least one electrical component that is connected to the lid, wherein the arrangement also comprises a lifting device to lift the lid with respect to the case to expose the electrical component for exchanging or servicing the electrical component, wherein the lifting device comprises at least one fixed component that is fixed with respect to the case and at least one movable component which is coupled to the lid, wherein the moveable component is movable with respect to the fixed component by at least one actuator to lift the lid. The transformer arrangement, especially the lifting device, can comprise a control unit that can control the actuator. Preferably the control unit controls multiple actuators to allow for coordinated operation of the actuators. E.g. multiple telescopic bars can be extended in unison to ensure an even lifting of the lid. The electrical component can be a bushing rod, a bushing, the core or a winding of the transformer.

The transformer can comprise a transformer core with at least two windings and at least one connecting element that is conductively connected to a respective winding and that extends through the lid. The connecting element can be the exposed component that is to be exchanged and/or serviced. The connecting element can be coupled to the lid via an isolation element, e.g. a bushing.

The at least one movable component can be, comprise or form a lift frame that is coupled to the lid at at least two separate positions. The lifting device can comprise at least one telescopic bar, wherein the lid is lifted by extending the telescopic bar via the actuator. Preferably the lifting device comprises at least two or three of the telescopic bars, wherein the lift frame is connected to a respective movable component of the telescopic bars. The telescopic bars are preferably distributed along a circumference of the case, especially at the corners of the case. The fixed components of the telescopic bars can be attached to the case or both the fixed components and the case can be connected to a common carrying structure. The carrying structure can, e.g. be a container in which the transformer is arranged or any other component of the wind turbine, e.g. a platform of the wind turbine.

The features discussed with respect to the inventive method can be transferred to the inventive transformer is arrangement and vice versa with all discussed advantages.

The above and further aspects, features and other advantages of the present invention will be more clearly understood from the following detailed description taken in conjunction with the accompanying drawings which shows schematically:
- Fig. 1: an embodiment of the transformer arrangement according to the present invention,
- Fig. 2: the transformer arrangement shown in Fig. 1 after the lid is lifted in an embodiment of the method for servicing a transformer according to the present invention, and
- Fig. 3: a top view of the arrangement shown in Fig. 1 and 2.

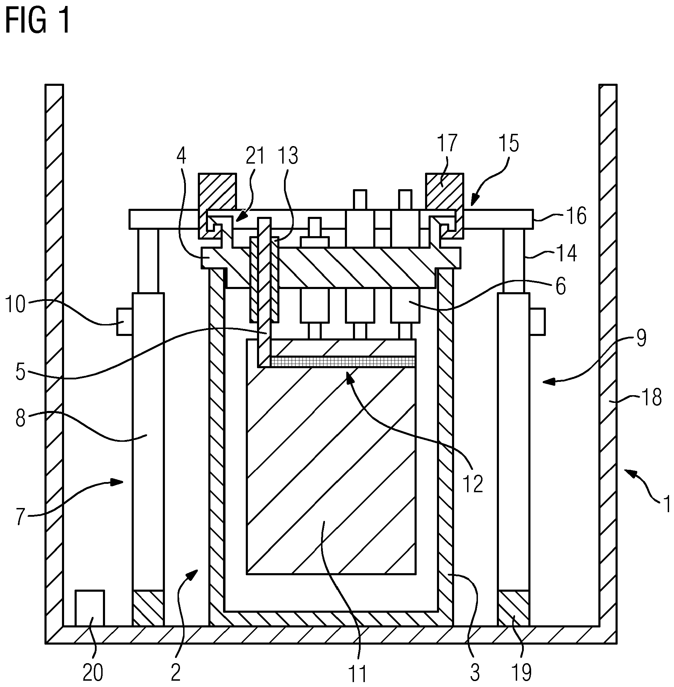

Fig. 1 shows a transformer arrangement 1 that can be used in an offshore wind turbine. The transformer arrangement 1 comprises a transformer 2 that comprises a case 3, a lid 4, that closes the case 3 and at least one electrical component 5, 6 that is connected to the lid 4. In the example shown in Fig. 1 the electrical components 5, 6 are high voltage and low voltage bushing rods that connect respective windings 12 to the outside world by passing through the lid 4. The rods can be attached to the lid 4 by an isolation element 13, e.g. a bushing.

The windings 12 are only shown schematically, since the detailed configuration of the core 11 and windings 12 is of limited relevance for the discussed embodiment and multiple possible configurations for the core 11 and the winding 12 are well known in the prior art. In the example only two high voltage bushing rods, the components 5, and two low voltage bushing rods, the components 6 are shown. E.g. three low voltage bushing rods and four high voltage bushing rods could be used to contact the transformer 2. Also additional components of the transformer, e.g. vacuum valves to evaluate the interior of the case 3, are not shown. The case 3 can, e.g. be filled by oil or another coolant to cool the core 11 and the windings 12.

The electrical components 5, 6 can be damaged, e.g. by extended use or when a lightning strikes the wind turbine. Exchanging these electrical components 5, 6 is problematic, since it requires access to the interior of the case 3. It would be possible to first remove the coolant from the case 3, then disassemble the case and then access the electrical components 5, 6. This would typically require to remove the transformer from its site of operation and might only be possible onshore.

To allow for an easier access to the electrical components 5, 6, the transformer arrangement 1 comprises a lifting device 7 to lift the lid 4 with respect to the case 3 to expose the electrical components 5, 6 for exchanging or servicing the electrical components. The lifting device 7 comprises fixed components 8, 19 that are fixed with respect to the case 3 and movable components 14, 16, 17 that are coupled to the movement of the lid 4. The movable components 14, 16, 17 are movable with respect to the fixed components 8, 19 by the actuators 10. Both the transformer 2 and the lifting device 7 are fixed to a common carrying structure 18, e.g. a container housing the transformer 2.

The actual lifting is performed by four telescopic bars 9, wherein each of the telescopic bars 9 comprises one of the fixed components 8 and one of the movable components 14. The relative position of the fixed component 8 and the movable component 14 of the telescopic rod 9 can be adjusted by a respective actuator 10. The actuator 10 can be an electrical actuator, e.g. an electric motor, that can be controlled by a control unit 20. The wiring between the actuator 10 and the control unit 20 is not shown. The actuator can, e.g. rotate a cog and the movable component 14 can be equipped with a vertical gear rack and can therefore be vertically shifted by rotating the cog.

When the movable components 14 are moved vertically upward by driving the actuators 10, a lift frame 15 comprising the movable components 16, 17 as orthogonal bars, is also lifted. Since the lid 4 is coupled to the lift frame 15 at at least two positions 21, e.g. by hooks, the lid 4 will be lifted with the lift frame 15.

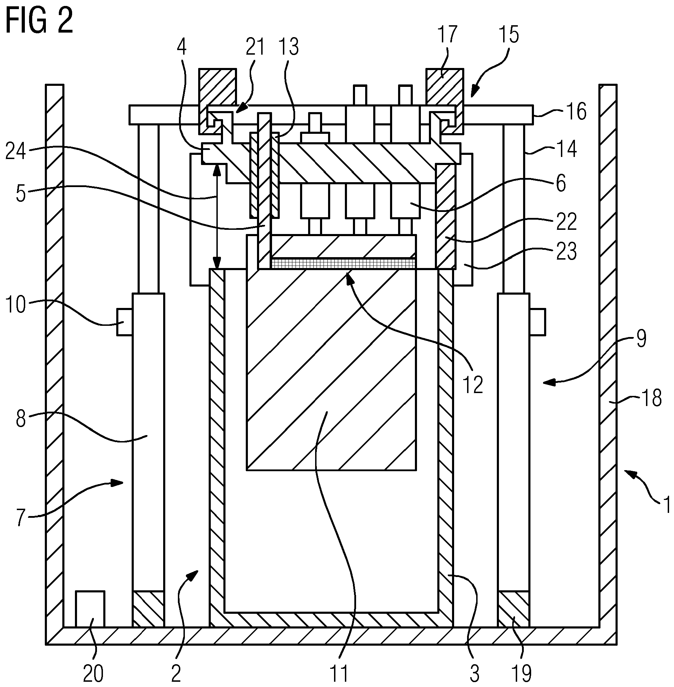

Fig. 2 shows the same arrangement as Fig. 1 after the telescopic bars 9 were extended by driving the actuators 10. As shown by the arrow 24, the lid 4 is lifted to a certain distance, e.g. at least 300 mm, above the case 3. Therefore the electrical components 5, 6 are easily accessable and can be exchanged or serviced by the service personal. To avoid a dropping of dirt or equipment into the case 3 and therefore, e.g. into the coolant of the transformer 2, a cover 23 or tarpaulin can be mounted between the case 3 and the lid 4.

While the lifting device 7 already provides a certain redundancy to ensure that the lid 4 cannot accidently drop down back onto the case 3 by using separate actuators to lift the cover 4, additionally redundancy can be added, e.g. by adding at least one blocking element 22 between the case 3 and the lid 4 after the lid 4 is lifted to the desired position.

After servicing and/or exchanging the electrical components 5, 6 that need servicing or exchanging, the cover 23 and the blocking element 22 can be removed and the lid 4 can be lowered back onto the case 3 by providing control signals from the control units 20 to the actuators 10 to contract the telescopic bars 9.

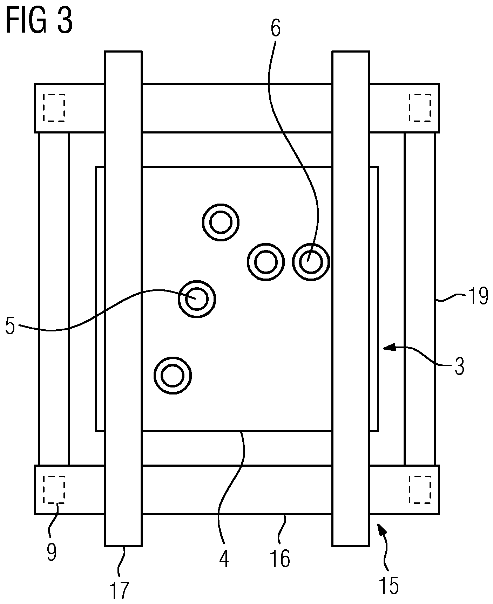

To more clearly show the structure of the transformer arrangement, Fig. 3 shows a top view of the transformer arrangement 1. The fixed component 19 is a frame that surrounds the case 3 of the transformer 2. At four corners of the case 3 the telescopic bars 9 are arranged. The movable component 14 of the telescopic bars 9 and therefore the upper end of the telescopic bars 9 is attached to the movable part 16 and the movable part 16 is coupled to the movable parts 17 to form the lift frame 15. The lift frame 15 is coupled to the lid 4 at at least two positions to allow for an even lifting of the lid 4.

Although the present invention has been described in detail with reference to the preferred embodiment, the present invention is not limited by the disclosed examples from which the skilled person is able to derive other variations without departing from the scope of the invention as claimed.

## Claims

1. Method for servicing a transformer, especially a transformer of a wind turbine, wherein a lifting device (7) is used to lift a lid (4) that closes a case (3) of a transformer (2) from the case (3) to expose at least one electrical component (5, 6) of the transformer (2) that is connected to the lid (4) for exchanging or servicing the electrical component (5, 6), wherein the lifting device (7) comprises at least one fixed component (8, 19) that is fixed with respect to the case (3) and at least one moveable component (14, 16, 17) that is coupled to the lid (4), wherein the moveable component (14, 16, 17) is moveable with respect to the fixed component (8, 19) by at least one actuator (10) to lift the lid (4).

2. Method according to claim 1, **characterized in that** a conductive connecting element that is electrically connected to a respective winding of the transformer and passes through the lid (4) is replaced as the electrical component (5, 6).

3. Method according to claim 1 or 2, **characterized in that** the lifting device (7) comprises at least one telescopic bar (9), wherein the lid (4) is lifted by extending the telescopic bar (9) via the actuator (10).

4. Method according to one of the preceding claims, **characterized in that** the at least one moveable component (14, 16, 17) is, comprises or forms a lift frame (15) that is coupled to the lid (4) at at least two separate positions (21).

5. Method according to claim 3 and 4, **characterized in that** the lifting device (7) comprises at least two or three of the telescopic bars (9), wherein the lift frame (15) is connected to all the telescopic bars (9).

6. Method according to one of the preceding claims, **characterized in that** the lid (4) is lifted until the distance between the lid (4) and the case (3) is at least 200 mm.

7. Method according to one of the preceding claims, **characterized in that** the lid (4) is locked into position after lifting the lid (4) by a locking means and/or **in that** at least one blocking element (22) is placed between the lid (4) and the case (3) before the electrical component (5, 6) is exchanged or serviced.

8. Method according to one of the preceding claims, **characterized in that** the gap between the lid (4) and the case (3) is at least partially covered by a cover (23) or a tarpaulin before the electrical component (5, 6) is exchanged or serviced.

9. Transformer arrangement, especially transformer arrangement for a wind turbine, comprising a transformer (2) that comprises a case (3), a lid (4) that closes the case (3) and at least one electrical component (5, 6) that is connected to the lid (4), wherein the arrangement comprises a lifting device (7) to lift the lid (4) with respect to the case (3) to expose the electrical component (5, 6) for exchanging or servicing the electrical component (5, 6), wherein the lifting device (7) comprises at least one fixed component (8, 19) that is fixed with respect to the case (3) and at least one moveable component (14, 16, 17) that is coupled to the lid (4), wherein the moveable component (14, 16, 17) is moveable with respect to the fixed component (8, 19) by at least one actuator (10) to lift the lid (4).

10. Transformer arrangement according to claim 9, **characterized in that** the transformer (2) comprises a transformer core (11) with at least two windings (12) and at least one connecting element that is conductively connected to a respective winding (12) and that extends through the lid (4).

11. Transformer arrangement according to claim 9 or 10, **characterized in that** the at least one moveable component (14, 16, 17) is, comprises or forms a lift frame (15) that is coupled to the lid (4) at at least two separate positions (21).

12. Transformer arrangement according to one of the claims 9 to 11, **characterized in that** the lifting device (7) comprises at least one telescopic bar (9), wherein the lid (4) is lifted by extending the telescopic bar (9) via the actuator (10).

13. Transformer arrangement according to claim 11 and 12, **characterized in that** the lifting device (7) comprises at least two or three of the telescopic bars (9), wherein the lift frame (15) is connected to a respective moveable component (14) of the telescopic bars (9).

14. Transformer arrangement according to claim 12 or 13, **characterized in that** the telescopic bars (9) are distributed along a circumference of the case (3), especially at corners of the case.

15. Transformer arrangement according to one of the claims 12 to 14, **characterized in that** the fixed components (8) of the telescopic bars (9) are attached to the case (3) or that the fixed components (8) and the case (3) are connected to a common carrying structure (18).

## Patentansprüche

1. Verfahren zum Warten eines Transformators, insbesondere eines Transformators einer Windenergieanlage, wobei eine Hubvorrichtung (7) zum Anheben eines Deckels (4), der ein Gehäuse (3) eines Transformators (2) verschließt, von dem Gehäuse (3) zwecks Freilegens mindestens einer mit dem Deckel (4) verbundenen elektrischen Komponente (5, 6) des Transformators (2) zum Austauschen oder Warten der elektrischen Komponente (5, 6) benutzt wird, wobei die Hubvorrichtung (7) mindestens eine feste Komponente (8, 19), die in Bezug auf das Gehäuse (3) fest ist, und mindestens eine bewegliche Komponente (14, 16, 17) umfasst, die mit dem Deckel (4) gekoppelt ist, wobei sich die bewegliche Komponente (14, 16, 17) zum Anheben des Deckels (4) durch mindestens ein Stellelement (10) in Bezug auf die feste Komponente (8, 19) bewegen lässt.

2. Verfahren nach Anspruch 1, **dadurch gekennzeichnet, dass** ein leitfähiges Verbindungselement, das elektrisch mit einer jeweiligen Wicklung des Transformators verbunden ist und durch den Deckel (4) hindurch verläuft, als elektrische Komponente (5, 6) ersetzt wird.

3. Verfahren nach Anspruch 1 oder 2, **dadurch gekennzeichnet, dass** die Hubvorrichtung (7) mindestens eine Teleskopstange (9) umfasst, wobei der Deckel (4) durch Ausfahren der Teleskopstange (9) über das Stellelement (10) angehoben wird.

4. Verfahren nach einem der vorherigen Ansprüche, **dadurch gekennzeichnet, dass** die mindestens eine bewegliche Komponente (14, 16, 17) ein an mindestens zwei getrennten Stellen (21) mit dem Deckel (4) gekoppelter Hubrahmen (15) ist, einen solchen umfasst oder bildet.

5. Verfahren nach Anspruch 3 und 4, **dadurch gekennzeichnet, dass** die Hubvorrichtung (7) mindestens zwei oder drei Telekopstangen (9) umfasst, wobei der Hubrahmen (15) mit allen Teleskopstangen (9) verbunden ist.

6. Verfahren nach einem der vorherigen Ansprüche, **dadurch gekennzeichnet, dass** der Deckel (4) angehoben wird, bis der Abstand zwischen dem Deckel (4) und dem Gehäuse (3) mindestens 200 mm beträgt.

7. Verfahren nach einem der vorherigen Ansprüche, **dadurch gekennzeichnet, dass** der Deckel (4), nachdem er angehoben wurde, durch ein Feststellmittel fixiert und/oder dass mindestens ein Arretiermittel (22) zwischen dem Deckel (4) und dem Gehäuse (3) angeordnet wird, bevor die elektrische Komponente (5, 6) ausgetauscht oder gewartet wird.

8. Verfahren nach einem der vorherigen Ansprüche, **dadurch gekennzeichnet, dass** der Spalt zwischen dem Deckel (4) und dem Gehäuse (3) zumindest teilweise mit einer Abdeckung (23) oder einer Plane abgedeckt wird, bevor die elektrische Komponente (5, 6) ausgetauscht oder gewartet wird.

9. Transformatoranordnung, insbesondere Transformatoranordnung für eine Windenergieanlage, mit einem Transformator (2), der ein Gehäuse (3), einen Deckel (4), der das Gehäuse (3) verschließt, und mindestens eine elektrische Komponente (5, 6) umfasst, die mit dem Deckel (4) verbunden ist, wobei die Anordnung eine Hubvorrichtung (7) zum Anheben des Deckels (4) in Bezug auf das Gehäuse (3) zwecks Freilegens der elektrischen Komponente (5, 6) zum Austauschen oder Warten der elektrischen Komponente (5, 6) umfasst, wobei die Hubvorrichtung (7) mindestens eine feste Komponente (8, 19), die in Bezug auf das Gehäuse (3) fest ist, und mindestens eine bewegliche Komponente (14, 16, 17) umfasst, die mit dem Deckel (4) gekoppelt ist, wobei sich die bewegliche Komponente (14, 16, 17) zum Anheben des Deckels (4) durch mindestens ein Stellelement (10) in Bezug auf die feste Komponente (8, 19) bewegen lässt.

10. Transformatoranordnung nach Anspruch 9, **dadurch gekennzeichnet, dass** der Transformator (2) einen Transformatorkern (11) mit mindestens zwei Wicklungen (12) und mindestens ein Verbindungselement umfasst, das leitend mit einer jeweiligen Wicklung (12) verbunden ist und durch den Deckel (4) hindurch verläuft.

11. Transformatoranordnung nach Anspruch 9 oder 10, **dadurch gekennzeichnet, dass** die mindestens eine bewegliche Komponente (14, 16, 17) ein an mindestens zwei getrennten Stellen (21) mit dem Deckel (4) gekoppelter Hubrahmen (15) ist, einen solchen umfasst oder bildet.

12. Transformatoranordnung nach einem der Ansprüche 9 bis 11, **dadurch gekennzeichnet, dass** die Hubvorrichtung (7) mindestens eine Teleskopstange (9) umfasst, wobei der Deckel (4) durch Ausfahren der Teleskopstange (9) über das Stellelement (10) angehoben wird.

13. Transformatoranordnung nach Anspruch 11 und 12, **dadurch gekennzeichnet, dass** die Hubvorrichtung (7) mindestens zwei oder drei Telekopstangen (9) umfasst, wobei der Hubrahmen (15) mit einer jeweiligen beweglichen Komponente (14) der Teleskopstangen (9) verbunden ist.

14. Transformatoranordnung nach Anspruch 12 oder 13, **dadurch gekennzeichnet, dass** die Teleskopstangen (9) an einem Umfang des Gehäuses (3) entlang, insbesondere auf Ecken des Gehäuses verteilt sind.

15. Transformatoranordnung nach einem der Ansprüche 12 bis 14, **dadurch gekennzeichnet, dass** die festen Komponenten (8) der Teleskopstangen (9) an dem Gehäuse (3) angebracht oder die festen Komponenten (8) und das Gehäuse (3) mit einer gemeinsamen Tragkonstruktion (18) verbunden sind.

## Revendications

1. Procédé d'entretien d'un transformateur, en particulier d'un transformateur d'une éolienne, dans lequel un dispositif de levage (7) est utilisé pour soulever un couvercle (4) qui ferme un boîtier (3) d'un transformateur (2) à partir du boîtier (3) pour exposer au moins un composant électrique (5, 6) du transformateur (2) qui est relié au couvercle (4) afin d'échanger ou d'entretenir le composant électrique (5, 6), dans lequel le dispositif de levage (7) comprend au moins un composant fixe (8, 19) qui est fixe par rapport au boîtier (3) et au moins un composant mobile (14, 16, 17) qui est couplé au couvercle (4), dans lequel le composant mobile (14, 16, 17) est mobile par rapport au composant fixe (8, 19) grâce à au moins un actionneur (10) pour soulever le couvercle (4).

2. Procédé selon la revendication 1, **caractérisé en ce qu'**un élément de connexion conducteur qui est électriquement connecté à un enroulement respectif du transformateur et traverse le couvercle (4) est remplacé en tant que composant électrique (5, 6) .

3. Procédé selon la revendication 1 ou 2, **caractérisé en ce que** le dispositif de levage (7) comprend au moins une barre télescopique (9), dans lequel le couvercle (4) est soulevé par l'extension de la barre télescopique (9) via l'actionneur (10).

4. Procédé selon l'une des revendications précédentes, **caractérisé en ce que** l'au moins un composant mobile (14, 16, 17) est, comprend ou forme un cadre de levage (15) qui est couplé au couvercle (4) dans au moins deux positions distinctes (21).

5. Procédé selon la revendication 3 et 4, **caractérisé en ce que** le dispositif de levage (7) comprend au moins deux ou trois des barres télescopiques (9), dans lequel le cadre de levage (15) est relié à toutes les barres télescopiques (9).

6. Procédé selon l'une des revendications précédentes, **caractérisé en ce que** le couvercle (4) est soulevé jusqu'à ce que la distance entre le couvercle (4) et le boîtier (3) soit d'au moins 200 mm.

7. Procédé selon l'une des revendications précédentes, **caractérisé en ce que** le couvercle (4) est verrouillé en position après le levage du couvercle (4) par un moyen de verrouillage et/ou **en ce qu'**au moins un élément de blocage (22) est placé entre le couvercle (4) et le boîtier (3) avant que le composant électrique (5, 6) soit échangé ou entretenu.

8. Procédé selon l'une des revendications précédentes, **caractérisé en ce que** l'espace entre le couvercle (4) et le boîtier (3) est au moins partiellement recouvert par une couverture (23) ou une bâche avant que le composant électrique (5, 6) soit échangé ou entretenu.

9. Agencement de transformateur, en particulier agencement de transformateur pour une éolienne, comprenant un transformateur (2) qui comprend un boîtier (3), un couvercle (4) qui ferme le boîtier (3) et au moins un composant électrique (5, 6) qui est relié au couvercle (4), dans lequel l'agencement comprend un dispositif de levage (7) pour soulever le couvercle (4) par rapport au boîtier (3) pour exposer le composant électrique (5, 6) afin d'échanger ou d'entretenir le composant électrique (5, 6), dans lequel le dispositif de levage (7) comprend au moins un composant fixe (8, 19) qui est fixe par rapport au boîtier (3) et au moins un composant mobile (14, 16, 17) qui est couplé au couvercle (4), dans lequel le composant mobile (14, 16, 17) est mobile par rapport au composant fixe (8, 19) grâce à au moins un actionneur (10) pour soulever le couvercle (4).

10. Agencement de transformateur selon la revendication 9, **caractérisé en ce que** le transformateur (2) comprend un noyau de transformateur (11) avec au moins deux enroulements (12) et au moins un élément de connexion qui est connecté de manière conductrice à un enroulement respectif (12) et qui s'étend à travers le couvercle (4).

11. Agencement de transformateur selon la revendication 9 ou 10, **caractérisé en ce que** l'au moins un composant mobile (14, 16, 17) est, comprend ou forme un cadre de levage (15) qui est couplé au couvercle (4) dans au moins deux positions distinctes (21).

12. Agencement de transformateur selon l'une des revendications 9 à 11, **caractérisé en ce que** le dispositif de levage (7) comprend au moins une barre télescopique (9), dans lequel le couvercle (4) est soulevé par l'extension de la barre télescopique (9) via l'actionneur (10).

13. Agencement de transformateur selon la revendication 11 et 12, **caractérisé en ce que** le dispositif de levage (7) comprend au moins deux ou trois des barres télescopiques (9), dans lequel le cadre de levage (15) est relié à un composant mobile respectif (14) des barres télescopiques (9).

14. Agencement de transformateur selon la revendication 12 ou 13, **caractérisé en ce que** les barres télescopiques (9) sont réparties le long d'une circonférence du boîtier (3), notamment aux coins du boîtier.

15. Agencement de transformateur selon l'une des revendications 12 à 14, **caractérisé en ce que** les composants fixes (8) des barres télescopiques (9) sont attachés au boîtier (3) ou **en ce que** les composants fixes (8) et le boîtier (3) sont reliés à une structure porteuse commune (18).
